# EUROPÄISCHE PATENTSCHRIFT

(11) **EP 0 565 905 B1**
(45) Veröffentlichungstag und Bekanntmachung des Hinweises auf die Patenterteilung: **06.11.1996**
(21) Anmeldenummer: 93104601.5
(22) Anmeldetag: 20.03.1993
(51) Int. Cl.: F16K 3/08

(54) **Regel- und Absperrventil**
Control and shut-off valve
Soupape de réglage et d'arrêt

(30) Priorität: 11.04.1992 DE 4212236
(43) Veröffentlichungstag der Anmeldung: 20.10.1993
(73) Patentinhaber: FRIEDRICH GROHE AKTIENGESELLSCHAFT, D-58675 Hemer (DE)
(72) Erfinder: Wagner, Friedrich, W-7833 Endingen (DE); Grau, Walter, W-7638 Mahlberg (DE)

(56) Entgegenhaltungen:
- EP-A- 0 442 559
- DE-C- 3 140 353
- FR-A- 2 524 105

## Beschreibung

Die Erfindung betrifft ein Regel- und Absperrventil, insbesondere für Wasserarmaturen, mit einer im Gehäuse unverdrehbar gehaltenen, wenigstens eine Durchtrittsöffnung aufweisenden Ventilsitzscheibe aus Keramikmaterial und geschliffener Sitzoberfläche, an der eine koaxial zur Mittelachse drehbare, ebenfalls aus Keramikmaterial hergestellte, wenigstens eine Durchtrittsöffnung aufweisende Ventilregulierscheibe mit einer geschliffenen Dichtfläche anliegt, wobei beide Scheiben am Außenbereich der Durchtrittsöffnungen einen umlaufenden, kreisringförmigen Scheibenrand haben.

Ein Ventil dieser Gattung ist aus der Druckschrift DE-C-31 40 353 bekannt. Bei diesem Ventil ist in den beiden Ventilscheiben jeweils in der einen Hälfte der Scheiben eine etwa halbkreisförmige Durchtrittsöffnung vorgesehen, so daß die bewegliche Scheibe durch eine Verdrehung um 180° von der vollgeschlossenen Stellung in die vollgeöffnete Stellung bewegbar ist. Durch das im Außenbereich der Durchtrittsöffnungen vorgesehene Ringstück werden die beiden etwa kreisförmigen Scheiben sicher aufeinander geführt. Hierbei kann es jedoch in dem Ringbereich zu ungünstigen Veränderungen des Reibkoeffizienten der Keramikpaarung aufgrund von Abrasionsverschleiß kommen, wie es auch bei Untersuchungen im Dauertest festgestellt worden ist. Mit der Erhöhung des Reibkoeffizienten steigen gleichzeitig in unerwünschter Weise auch die Bedienkräfte im Laufe der Gebrauchszeit.

Der erhöhte Abrasionsverschleiß im Ringbereich der Scheiben liegt darin, daß die feinstbearbeiteten Dichtflächen in diesem Bereich nicht von dem durch das Ventil durchtretende Wasser benetzt werden und im Laufe der Benutzungszeit folglich trocken laufen. Hinzu kommt, daß aus der feinstbearbeiteten Dichtfläche herausgelöste Körner oder Kornverbände der Keramikoberfläche aus dem umlaufenden Ringbereich nicht herausgeschwemmt, sondern zwischen den dauernd in Kontakt stehenden Dicht- und Gleitflächen zermahlen werden.

Bei einem anderen, in der EP-A-0 442 559 veröffentlichten Ventil ist es bekannt, die Durchlaßöffnung in der festen Scheibe mit einem erhöhten Rand zu versehen. Hierbei ist auf der der Durchlaßöffnung gegenüberliegenden Seite ein Oberflächenabschnitt vorgesehen, der dem erhöhten Rand entspricht.

Ferner ist es bekannt (DE-A-28 05 038 / DE-U-78 27 429), bei Ventilen mit Keramikscheiben, welche über einen Drehwinkel von 180° von der Schließstellung in die Offenstellung bewegbar sind, die drehbare Ventilregulierscheibe mit einer Dichtfläche zu versehen, die als Kreissegmentfläche ausgebildet ist. Hierbei entfällt dann die Kreisringfläche am Außenrand der Ventilregulierscheibe. Die Ventilregulierscheibe ist also quasi als "Halbscheibe" ausgebildet. Hierbei wurde durch Untersuchungen festgestellt, daß die Ventilregulierscheibe zur Ventilsitzscheibe zumindest im Mikrobereich Verkippungen erfährt, was zu einem starken Abrasionsverschleiß an den Kanten der als "Halbscheibe" ausgebildeten Ventilregulierscheibe und der Dichtfläche der Ventilsitzscheibe führt, so daß dieses schon nach relativ kurzen Öffnungs-und Schließvorgängen (Lastwechselzahlen) zwischen 20.000 und 50.000 zu Undichtigkeiten führen kann, was äußerst unerwünscht ist.

Der Erfindung liegt die Aufgabe zugrunde, das im Oberbegriff des Anspruchs 1 angegebene Ventil zu verbessern und so auszubilden, daß die eingangs aufgeführten Nachteile vermieden werden und die Leichtgängigkeit des Ventils über einen relativ langen Benutzungszeitraum erhalten bleibt.

Diese Aufgabe wird erfindungsgemäß dadurch gelöst, daß dieser in der Schließstellung nicht als Dichtfläche wirkende Scheibenrand um die wenigstens eine Durchtrittsöffnung im Bereich der geschliffenen Dichtfläche der Ventilregulierscheibe oder der Ventilsitzscheibe aus der Dichtebene ein oder mehrere zurückgesetzte Flächenteile aufweist. Mit diesen Maßnahmen wird erreicht, daß der umlaufende Ringbereich der Dichtfläche unterbrochen wird und hier mit dem durch die Ventilscheiben durchströmenden Wasser benetzt wird, welches auch als Gleitmittel wirkt. Außerdem können aus der Dichtfläche herausgelöste Körner oder Kornverbände aus dem Dichtbereich herausgeschwemmt werden. Andererseits wird durch die verbleibenden Dichtflächen im Bereich des Kreisrings sichergestellt, daß ein Verkippen der beiden Scheiben zueinander auch im Mikrobereich vermieden wird und somit eine lange Dichtheit der Ventilscheibenpaarung gewährleistet ist. In den Ansprüchen 2 bis 7 sind Ausgestaltungen der Erfindung dargestellt.

Ausführungsbeispiele der Erfindung sind in der Zeichnung dargestellt und werden im folgenden näher erläutert. Es zeigt
- Figur 1: ein Regel- und Absperrventil im Längsschnitt;
- Figur 2: das Regel- und Absperrventil gemäß Figur 1 in der Schnittebene I;
- Figur 3: die in Figur 1 gezeigte Mengenregulierventilscheibe in der Schnittebene III der Figur 4;
- Figur 4: die in Figur 1 gezeigte Ventilregulierscheibe in Draufsicht auf die Dichtfläche;
- Figur 5: eine andere Ventilregulierscheibe in Draufsicht auf die Dichtfläche;
- Figur 6: eine weitere Ventilregulierscheibe in Draufsicht auf die Dichtfläche;
- Figur 7: eine andere Ventilsitzscheibe in Draufsicht auf die Dichtfläche, wobei diese Ventilsitzscheibe kein Ausführungsbeispiel der Erfindung darstellt, sondern lediglich eine mit der Erfindung zusammenwirkende Ausgestaltungsform.

Der Einfachheit halber sind bei den Ausführungsbeispielen in der Zeichnung gleiche oder entsprechende Elemente mit jeweils gleichen Bezugszeichen versehen.

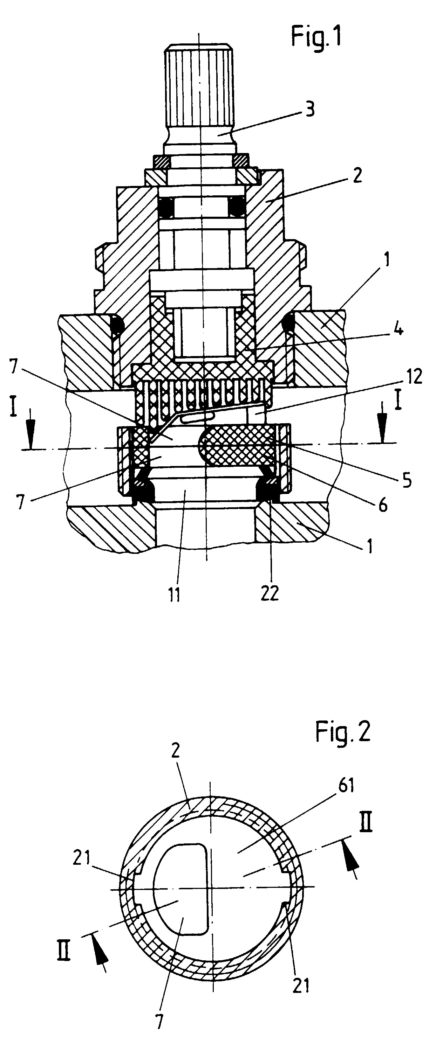

Das in den Figuren 1 bis 4 dargestellte Regel- und Absperrventil ist in einer zum Teil gezeigten Armatur 1 für Wasserleitungen einmontiert dargestellt. Hierbei sind die Ventilorgane in einem Gehäuse 2 angeordnet, welches mittels Gewinde in die Armatur 1 eingeschraubt ist, wobei in dem Gehäuse 2 eine koaxiale Einlaßöffnung 11 ausgebildet ist, die mit Hilfe einer Dichtung 22 dicht mit einem Wasserzulaufkanal der Armatur 1 verbunden ist. In dem Gehäuse 2 ist koaxial eine Ventilspindel 3 mit einem Drehglied 4 axial festliegend drehbar gelagert. Von dem Drehglied 4 ist eine Ventilregulierscheibe 5 aus Keramikmaterial drehfest aufgenommen. Stromaufwärts vor der Ventilregulierscheibe 5 ist eine Ventilsitzscheibe 6 drehfest in Längsnuten 21 des Gehäuses 2 angeordnet. Die Ventilsitzscheibe 6 liegt mit einer geschliffenen Dichtfläche 61 an einer ebenfalls geschliffenen Dichtfläche 51 der Ventilregulierscheibe 5 an. Die Oberflächen sind so feinbearbeitet, daß eine wasserdichte Absperrung ermöglicht ist. In jeweils einer Hälfte der Ventilregulierscheibe 5 und der Ventilsitzscheibe 6 ist eine etwa halbkreisförmig ausgebildete Durchtrittsöffnung 7 vorgesehen.
In der in Figur 1 gezeigten Stellung der beiden Ventilscheiben befindet sich das Regel- und Absperrventil in voll geöffneter Stellung. Das an der Einlaßöffnung 11 eintretende Frischwasser gelangt durch die beiden Durchtrittsöffnungen 7 und tritt danach radial an in der Seitenwandung des Gehäuses 2 ausgebildeten Auslaßöffnungen 12 aus und gelangt dann in den Abströmkanal der Armatur 1. Durch Drehung der Ventilspindel 3 wird die Ventilregulierscheibe 5 entsprechend zur Ventilsitzscheibe 6 verdreht, so daß bei einer Drehung um 180 o die beiden Ventilscheiben 5,6 den Durchfluß absperren. In Zwischenstellungen wird ein entsprechend gedrosselter Durchtritt ermöglicht.

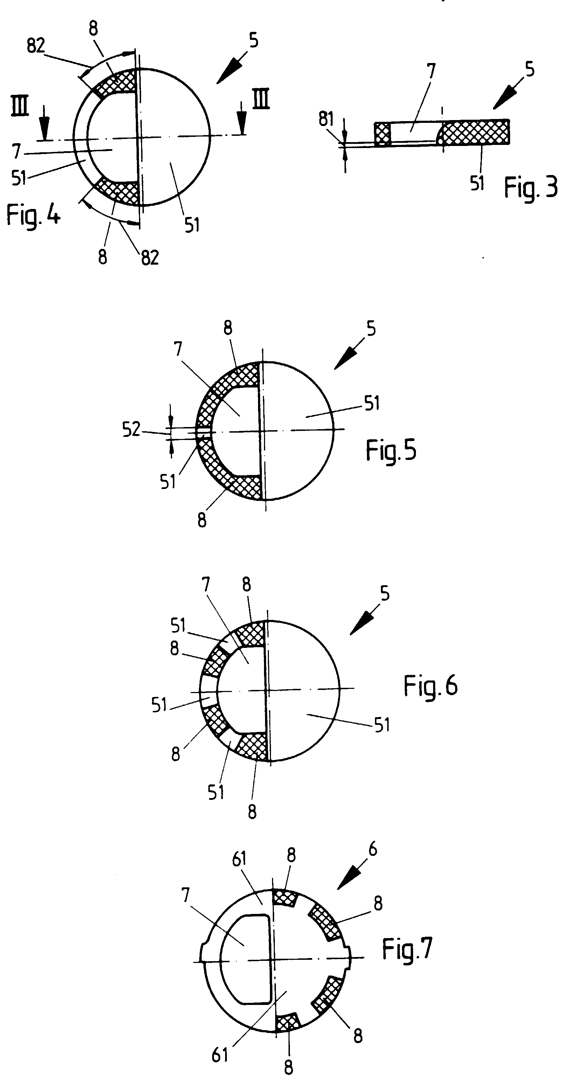

Zur Minderung des Abrasionsverschleißes im äußeren Ringbereich der beiden Ventilscheiben sind an der Ventilregulierscheibe 5 im Bereich des äußeren Ringbogens in der Hälfte der Durchtrittsöffnung 7 in einem Winkelbereich 82 axial zurückgesetzte Flächenteile 8 ausgebildet, wie es insbesondere aus Figur 4 zu entnehmen ist. Die Flächenteile 8 sind um eine Strecke 81 von etwa 0,2 bis 0,4 mm zurückgesetzt. Durch diese zurückgesetzten Flächenteile 8 wird erreicht, daß die äußere umlaufende Ringfläche unterbrochen wird. Die zurückgesetzten Flächenteile 8 bilden bei Anlage an der Ventilsitzscheibe 6 feine Radialschlitze, durch die das im Ventil vorhandene Wasser hindurchtreten kann und somit Abriebpartikel im Bereich der Dichtflächen 51,61 herausgeschwemmt werden können. Andererseits wird durch die Anwesenheit des Wassers das Reibverhalten günstig beeinflußt. Eine sichere Abstützung, die ein Verkippen auch im Mikrobereich ausschließt, ist durch den verbleibenden Teil der Dichtfläche 51 im Ringbereich an der Außenseite der Durchtrittsöffnung 7 gewährleistet.
Die zurückgesetzten Flächenteile 8 erstrecken sich zu beiden Seiten des Ringbereiches über einen Winkelbereich 82 von etwa 45°.

In Figur 5 ist ein anderes Ausführungsbeispiel der Ventilregulierscheibe 5 dargestellt. Die zurückgesetzten Flächenteile 8 umfassen hierbei nahezu den gesamten Ringbogen im Außenbereich der Durchtrittsöffnung 7. Lediglich ein Bogenstück 52 von einer Länge von etwa 1,5 bis 2 mm senkrecht zur Basisfläche des halbkreisförmigen Querschnitts der Durchtrittsöffnung 7 befindet sich in der Ebene der Dichtfläche 51 und bewirkt die Abstützung.

In Figur 6 ist ein weiteres Ausführungsbeispiel der Ventilregulierscheibe 5 dargestellt. Anstatt eines Bogenstücks, das etwa senkrecht zur Basis des halbkreisförmigen Querschnitts der Durchtrittsöffnung 7 angeordnet ist, sind hier drei etwa symmetrisch angeordnete Stützflächen in der Ebene der Dichtfläche 51 vorgesehen und dazwischen jeweils zurückgesetzte Flächenteile 8 angeordnet.
In Figur 7 ist schließlich eine andere Ausgestaltungsform der Ventilsitzscheibe 6 dargestellt. In der Dichtfläche 61 sind hierbei in der der Durchtrittsöffnung 7 gegenüberliegenden Hälfte im äußeren Randbereich zusätzlich zurückgesetzte Flächenteile 8 angeordnet. Die Flächenteile 8 erstrecken sich hierbei radial in Richtung auf den Mittelpunkt soweit, daß in der Schließstellung die Ventilregulierscheibe 5 mit der Durchtrittsöffnung 7 an der Ventilsitzscheibe 6 sicher abgedichtet ist. Das in dem Gehäuse 2 vorhandene Wasser kann somit auch in diesem Bereich der zurückgesetzten Flächenteile 8 eindringen und eine Benetzung der beiden Dichtflächen 51,61 im Ringbereich bewirken. Die Ventilsitzscheibe 6 wirkt hierbei mit einer der in den Figuren 4 bis 6 angegebenen Ventilregulierscheiben 5 zusammen.

## Patentansprüche

1. Regel- und Absperrventil, insbesondere für Wasserarmaturen, mit einer im Gehäuse (2) unverdrehbar gehaltenen, wenigstens eine Durchtrittsöffnung (7) aufweisenden Ventilsitzscheibe (6) aus Keramikmaterial und geschliffener Sitzoberfläche, an der eine koaxial zur Mittelachse drehbare, ebenfalls aus Keramikmaterial hergestellte, wenigstens eine Durchtrittsöffnung (7) aufweisende Ventilregulierscheibe (5) mit einer geschliffenen Dichtfläche anliegt, wobei beide Scheiben am Außenbereich der Durchtrittsöffnungen (7) einen umlaufenden, kreisringförmigen Scheibenrand haben, dadurch gekennzeichnet, daß dieser in der Schließstellung nicht als Dichtfläche wirkende Scheibenrand um die wenigstens eine Durchtrittsöffnung (7) im Bereich der geschliffenen Dichtfläche (51,61) der Ventilregulierscheibe (5) oder der Ventilsitzscheibe (6) aus der Dichtebene ein oder mehrere zurückgesetzte Flächenteile (8) aufweist.

2. Regel- und Absperrventil nach Anspruch 1, dadurch gekennzeichnet, daß die Flächenteile (8) aus der Dichtfläche (51,61) um eine Strecke (81) von etwa 0,2 bis 0,4 mm zurückgesetzt sind.

3. Regel- und Absperrventil nach Anspruch 1 oder 2, dadurch gekennzeichnet, daß die Ventilregulierscheibe (5) und die Ventilsitzscheibe (6) die Durchtrittsöffnungen (7) jeweils auf der einen Hälfte der Scheiben haben und wenigstens ein zurückgesetztes Flächenteil (8) auf der Kreisringfläche im Bereich der Durchtrittsöffnung (7) bzw. Durchtrittsöffnungen auf der Ventilregulierscheibe (5) ausgebildet ist.

4. Regel- und Absperrventil nach Anspruch 3, dadurch gekennzeichnet, daß die Durchtrittsöffnung (7) im Querschnitt etwa halbkreisförmig ausgebildet ist, wobei der an die Hälfte der Dichtfläche (51) anschließende Kreisring der Ventilregulierscheibe (5) an den beiden Endbereichen in einem Winkelbereich (82) von etwa 45 bis 70° die zurückgesetzten Flächenteile (8) aufweist.

5. Regel- und Absperrventil nach Anspruch 3, dadurch gekennzeichnet, daß die Durchtrittsöffnung (7) einen etwa halbkreisförmigen Querschnitt aufweist und daß der die Durchtrittsöffnung (7) umfassende Kreisringteil bis auf ein senkrecht zur Basis der etwa halbkreisförmigen Durchtrittsöffnung (7) angeordnetes Bogenstück (52) von etwa 1,5 bis 2 mm Bogenlänge zurückgesetzte Flächenteile (8) hat.

6. Regel- und Absperrventil nach Anspruch 3, dadurch gekennzeichnet, daß auf der Kreisringfläche im Bereich der Durchtrittsöffnung (7) mehr als zwei, vorzugsweise vier zurückgesetzte Flächenteile (8) und mehr als zwei, vorzugsweise drei nicht zurückgesetzte Flächenteile ausgebildet sind.

7. Regel- und Absperrventil nach einem der Ansprüche 1 bis 6, dadurch gekennzeichnet, daß auf der Ventilsitzscheibe (6) an der der Durchtrittsöffnung (7) bzw. Durchtrittsöffnungen gegenüberliegenden Hälfte auf der äußeren Kreisringfläche eine oder mehrere zurückgesetzte Flächenteile (8) vorgesehen sind, wobei sich die zurückgesetzten Flächenteile (8) an der Außenseite radial in Richtung auf den Mittelpunkt der Ventilsitzscheibe (6) nur soweit erstrekken, daß in der Schließstellung die Durchflußöffnung (7) bzw. Durchflußöffnungen der Ventilregulierscheibe (5) dicht verschlossen sind.

## Claims

1. Control and shut-off valve, especially for water fittings, having a valve seat disk (6) that is mounted non-rotatably in the housing (2), has at least one through opening (7) and is made of ceramics and has a polished seat face, against which valve seat disk there rests a valve control disk (5) that is rotatable coaxially with the centre axis, is likewise made of ceramics and has at least one through opening (7) and a polished sealing surface, both disks having a circumferential, annular disk rim on the outer region of the through openings (7), characterised in that that disk rim, which, in the closed position, does not act as a sealing surface, has around the through opening (7), of which there is at least one, in the region of the polished sealing surface (51, 61) of the valve control disk (5) or of the valve seat disk (6) one or more surface portions (8) that are set back from the sealing plane.

2. Control and shut-off valve according to claim 1, characterised in that the surface portions (8) are set back from the sealing surface (51, 61) by a distance (81) of approximately from 0.2 to 0.4 mm.

3. Control and shut-off valve according to claim 1 or claim 2, characterised in that the valve control disk (5) and the valve seat disk (6) each have the through opening (7) on one half of the disk and at least one set-back surface portion (8) is formed on the annular surface in the region of the through opening(s) (7) on the valve control disk (5).

4. Control and shut-off valve according to claim 3, characterised in that the through opening (7) is approximately semi-circular in cross-section and the annulus of the valve control disk (5) adjoining the half having the sealing surface (51) has the set-back surface portions (8) on its two end regions in an arc region (82) of approximately from 45 to 70°.

5. Control and shut-off valve according to claim 3, characterised in that the through opening (7) is approximately semi-circular in cross-section and the annular portion surrounding the through opening (7) has set-back surface portions (8), with the exception of a curve piece (52) of approximately from 1.5 to 2 mm in length that is arranged perpendicularly to the base of the approximately semi-circular through opening (7).

6. Control and shut-off valve according to claim 3, characterised in that more than two, preferably four, set-back surface portions (8) and more than two, preferably three, non-set-back surface portions are formed on the annular surface in the region of the through opening (7).

7. Control and shut-off valve according to any one of claims 1 to 6, characterised in that one or more set-back surface portions (8) are provided on the valve seat disk (6) on the outer annular surface on the half that is opposite to the through opening(s) (7), the set-back surface portions (8) on the outer side extending radially in the direction towards the centre point of the valve seat disk (6) only so far that, in the closed position, the through opening(s) (7) of the valve control disk (5) is/are sealed tightly.

## Revendications

1. Vanne de régulation et d'arrêt notamment pour de la robinetterie (2) comportant une rondelle formant siège de soupape (6) maintenue fixe en rotation dans le corps de la vanne et ayant au moins un orifice de passage (7), cette rondelle étant en matière céramique avec une surface supérieure, rodée, formant siège, contre laquelle s'appuie une rondelle de régulation de vanne (5), également en matière céramique, ayant au moins un orifice de passage (7) avec une surface d'étanchéité rodée, les deux rondelles ayant, dans la zone extérieure des orifices de passage (7), un bord de rondelle en forme d'anneau de serrage, périphérique,
caractérisée en ce que
ce bord de rondelle qui ne fonctionne pas comme surface d'étanchéité en position de fermeture, comporte une ou plusieurs parties de surface (8) en retrait par rapport au plan d'étanchéité, avec au moins un orifice de passage (7) au niveau de la surface d'étanchéité rodée (51, 61) de la rondelle de régulation (5) et de la rondelle formant siège (6).

2. Vanne de régulation et d'arrêt selon la revendication 1,
caractérisée en ce que
les parties de surface (8) sont en retrait par rapport à la surface d'étanchéité (51, 61) d'une distance (81) de l'ordre de 0,2 à 0,4 mm.

3. Vanne de régulation et d'arrêt selon la revendication 1 ou 2,
caractérisée en ce que
la rondelle de régulation de vanne (5) et la rondelle de siège de clapet (6) ont les orifices de passage (7) chaque fois sur une moitié des rondelles, et au moins une partie de surface (8) est réalisée en retrait sur la surface en anneau de cercle au niveau de l'orifice de passage (7) ou des orifices de passage (7) sur la rondelle de régulation de vanne (5).

4. Vanne de régulation et d'arrêt selon la revendication 3,
caractérisée en ce que
l'orifice de passage (7) a une section sensiblement en forme de demi-cercle, l'anneau de cercle de la rondelle de régulation de vanne (5) adjacent à la moitié de la surface d'étanchéité (51) ayant des parties de surface (8) en retrait dans une plage angulaire (82) comprise entre 45 et 70° au niveau des deux zones d'extrémité.

5. Vanne de régulation et d'arrêt selon la revendication 3,
caractérisée en ce que
l'orifice de passage (7) a une section sensiblement en forme de demi-cercle et la partie d'anneau de cercle comprenant l'orifice de passage (7), à l'exception d'une pièce d'arc (52) perpendiculaire à la base de l'orifice de passage (7) en forme de demi-cercle, présente des parties de surface (8) en retrait sur une longueur d'arc d'environ 1,5 à 2 mm.

6. Vanne de régulation et d'arrêt selon la revendication 3,
caractérisée en ce que
sur la surface d'anneau de cercle, au niveau de l'orifice de passage (7), il y a plus de deux et de préférence quatre parties de surface (8) en retrait, et plus de deux et de préférence trois parties de surface non en retrait.

7. Vanne de régulation et d'arrêt selon l'une des revendications 1 à 6,
caractérisée en ce que
sur la rondelle formant siège de clapet (6), au niveau de la moitié en regard de l'orifice de passage (7) ou des orifices de passage, sur la surface extérieure de l'anneau de cercle, il y a une ou plusieurs parties de surface (8) en retrait, et les parties de surface en retrait (8) ne s'étendent sur le côté extérieur, radialement en direction du centre de la rondelle formant siège de clapet (6), que juste assez loin pour qu'en position de fermeture, l'orifice de passage (7) ou les orifices de passage (7) de la rondelle de régulation de vanne (5) soient fermés de manière étanche.
